# EUROPÄISCHE PATENTSCHRIFT

(11) **EP 0 571 355 B1**
(45) Veröffentlichungstag und Bekanntmachung des Hinweises auf die Patenterteilung: **11.09.1996**
(21) Anmeldenummer: 93890065.1
(22) Anmeldetag: 31.03.1993
(51) Int. Cl.: B64D 1/16

(54) **Behälter**
Container
Réservoir

(30) Priorität: 21.05.1992 AT 1048/92
(43) Veröffentlichungstag der Anmeldung: 24.11.1993
(73) Patentinhaber: Renzler, Walter, A-2451 Au am Leithagebirge (AT)
(72) Erfinder: Renzler, Walter, A-2451 Au am Leithagebirge (AT)
(74) Vertreter: Köhler-Pavlik, Johann, Dipl.-Ing.

(56) Entgegenhaltungen:
- EP-A- 0 233 090
- FR-A- 2 355 729
- US-A- 1 494 076
- US-A- 3 688 952
- US-A- 4 240 507
- US-A- 4 660 733

## Beschreibung

Die Erfindung betrifft einen Behälter, insbesondere zur Beförderung und Verbreitung von Material mittels Fluggeräten, speziell einen Außenlastbehälter für Flugzeuge oder Hubschrauber, bestehend aus einer stehend-zylindrischen Außenwandung, einem sich an die stehend-zylindrische Außenwandung nach unten hin anschließenden, im wesentlichen kegelstumpfförmig auf die Behälterachse zulaufenden Abschnitt, der nach unten hin durch einen ebenen und normal auf die Behälterachse stehenden Boden begrenzt ist, der durch eine Platte verschließbar ist, und mehreren Aufhängevorrichtungen.

Ein derartiger Behälter ist aus US-A-3 688 952 bekannt.

Behälter, die außen unter einem Flugzeug befestigt werden und zur Beförderung und Abgabe von Material aus diesem Behälter während des Fluges dienen, sind bereits längere Zeit bekannt. Insbesondere kommen sie als Löschwasserbehälter zum Einsatz, wenn großflächige Brände oder Brände in für Löschfahrzeuge unzugänglichem Gebiet bekämpft werden sollen. In gleicher Weise könnten derartige Behälter aber auch zur Beförderung und Ausbringung von Düngemitteln oder Schädlingsbekämpfungsmitteln mit Hilfe von Flugzeugen oder Hubschraubern dienen. Beim Einsatz zur Feuerbekämpfung können dem Löschwasser auch Zusätze, wie Schaum oder Bindemittel, beigegeben sein. Ein weiteres Einsatzgebiet des besagten Behälters ist die Verwendung als Wasserreservoir, auch zur Trinkwasserversorgung, das durch Fluggeräte an den jeweiligen Aufstellungsort gebracht werden kann.

Gemäß der üblichen Konstruktionsart besteht der Behälter aus einer im wesentlichen runden Außenwandung, an die sich bodenseitig eine nach außen konvexe Fläche anschließt. In dieser Bodenfläche ist eine verschließbare Öffnung zum Ausbringen des im Behälter befindlichen Materials vorgesehen. Meist sind in der besagten Außenwandung des Behälters Öffnungen vorgesehen, die durch entfernbare Verschlußelemente verschließbar sind, wodurch eine Veränderung des Fassungsvermögens zur Anpassung an unterschiedliche Einsatzzwecke und die Tragkraft des jeweiligen Fluggerätes möglich ist. Am oberen Rand des Behälters sind Aufhängvorrichtungen zur Anbringung am Fluggerät vorgesehen und schließlich sind auch Einrichtungen dafür vorhanden, die verschließbare Öffnung im Boden des Behälters vom Flugzeug aus, bzw. allgemein fernbetätigt, zu öffnen und vorzugsweise auch wieder zu verschließen. Zur Aufbewahrung und Lagerung der herkömmlichen Behälter ist es aufgrund der konvexen Bodenfläche notwendig, einen Standring an der Unterseite vorzusehen, der vorteilhafterweise mit einer zur Behälterachse hin auskragenden Standfläche versehen ist.

Gemäß US-A-4 660 733 ist es bekannt, einen für stehenden Transport vorgesehenen Behälter mit einem oberen, kuppelförmigen Abschnitt zu versehen.

Die Aufgabe der vorliegenden Erfindung besteht darin, für einen eingangs beschriebenen Behälter eine Konstruktion anzugeben, bei der eine verbesserte Ausflußcharakteristik für das zu verbreitende Material bei gleichzeitig verbesserter Handhabbarkeit und Funktionssicherheit während des Einsatzes gegeben ist.

Diese Aufgabe wird erfindungsgemäß dadurch gelöst, daß zumindest drei Aufhängevorrichtungen über den Umfang des Behälters verteilt und am oberen Randbereich der stehend-zylindrischen Außenwandung befestigt sind und sich an die stehend-zylindrische Außenwandung auch nach oben hin ein im wesentlichen kegelstumpfförmiger auf die Behälterachse zulaufender Abschnitt anschließt.

Der erfindungsgemäße Behälter ist also aus drei axial aufeinanderfolgenden Abschnitten aufgebaut, wobei der untere, in bekannter Weise trichterförmige Abschnitt die Ausbringung des Materials günstig beeinflußt. Durch die trichterförmige Leitung des auszubringenden Materials bis zur Abstragsöffnung hin wird der Materialstrom gut konzentriert und Verwirbelungen gleich anschließend an die Behälteröffnung werden zu einem großen Teil reduziert. Dadurch ergibt sich ein relativ gut begrenzter Materialstrom vom Querschnitt der Auslaßöffnung, welcher sich erst eine geraume Distanz unterhalb der Öffnung aufzulösen und zu verteilen beginnt. Dies ist im besonderen zur zielsicheren Ausbringung von Material aus relativ großen Höhen von Vorteil. Durch den oberhalb des zylindrischen Mittelstückes vorgesehenen kegelstumpfförmigen Abschnitt wird dagegen die Handhabung verbessert, was darauf beruht, daß die zumindest drei, eine besonders stabile Aufhängung während des Transportes gewährleistenden Aufhängvorrichtungen am oberen Rand des Mittelstückes befestigt sind, über welche sich der besagte obere Abschnitt noch hinaus erstreckt. Durch diesen oberen Abschnitt, der eine Abschattung bildet, können sich die zur Anbringung am Flugzeug oder Hubschrauber vorgesehenen Seile, Gurten, Ketten od.dgl. nicht verhängen, sodaß die Handhabung und die Betriebssicherheit während des Einsatzes wesentlich erhöht ist.

Diese Sicherheit gegen Verhängen der Tragelemente wird gemäß einem weiteren Merkmal noch erhöht, welches darin besteht, daß in der Wandung des oberen Abschnittes Einbuchtungen vorgesehen sind, in welchen Einbuchtungen als Aufhängevorrichtungen Laschen liegen, die an Platten vorgesehen sind, welche Platten an der Innenseite der stehend-zylindrischen Wandung des Behälters befestigt sind. Durch die Lage der Laschen in den Einbuchtungen ist im oberen Abschnitt des Behälters kein nach außen ragender Teil vorgesehen, an dem sich die Tragelemente oder andere Kabel, Leitungen usw. verhängen können. Auch die Anbringung der Platten, an welchen die Laschen vorgesehen sind,an der Innenwandung des Mittelstückes des Behälters trägt zur glatten Gestaltung der Außenwand bei.

Zum einfachen, schnellen und sicheren An- und Abkoppeln des Behälters vom Traggehänge ist an jeder Lasche gemäß einem weiteren Merkmal der Erfindung ein Konnexglied angeschlossen und dieses mit dem Traggehänge aus Gurten, Seilen, Ketten od.dgl. verbunden. Auch das besagte Konnexglied bleibt im Bereich der Einbuchtung, wodurch ein Verhängen zwischen Konnexglied und Anschlußseil sicher vermieden ist.

Die Betriebssicherheit allgemein und insbesondere die Sicherheit gegen Verhängen von weit herabhängenden Seilen, Kabeln, Leitungen od.dgl. am Behälter wird gemäß einem weiteren Merkmal der Erfindung dadurch verbessert, daß in der Wandung des Mittelstückes zumindest eine verschließbare Öffnung, vorzugsweise eine Mehrzahl von Öffnungen, in zumindest zwei unterschiedlichen Höhen des Mittelstückes vorgesehen sind, deren Verschlußelement vorzugsweise mit der Wand des Mittelstückes glatt abschließt. Damit ist eine Möglichkeit zur Veränderung des Fassungsvermögens des Behälters gegeben, um diesen an bestimmte Einsatzbedingungen und die Tragkraft des Fluggerätes anzupassen, wobei jedoch die Einrichtung zu der besagten Anpassung, die Handhabbarkeit und Betriebssicherheit des Behälters in keiner Weise nachteilig beeinflussen.

Vorteilhafterweise ist jedes Verschlußelement ein an der Wandung des Mittelstückes befestigter Schraubverschluß. Die Anpassung des Fassungsvermögens ist dabei wiederholt und einfach, allenfalls sogar ohne Werkzeug möglich und die Verschlußelemente der nicht verschlossenen Öffnung können nicht verlorengehen.

Gemäß einem weiteren Merkmal der Erfindung ist die Platte zum Verschließen des Bodens des Behälters an der Innenseite des Bodens angeordnet und in Richtung der Behälterachse mittels einer vom tragenden Fluggerät aus ansteuerbaren Antriebseinheit mit Rutschkupplung bewegbar. Die Anbringung der Platte an der Innenseite des Bodens hat den Vorteil, daß das Gewicht des im Behälter befindlichen Materials selbst die Platte während des Transportes gegen den Boden des Behälters drückt und diesen derart abdichtet. Gleichzeitig ist während des Transportes bei hoher Belastung der Platte die Antriebseinheit und deren Anbringungselemente am Behälter entlastet, da sie nicht das Gewicht des über der Platte befindlichen Materials aufnehmen bzw. mittragen müssen. Ein Schutz der Antriebseinheit selbst ist auch durch die Rutschkupplung gegeben, die gewährleistet, daß auch bei einer Betätigung der Antriebseinheit über das zum Öffnen oder Schließen hinaus erforderliche Maß bzw. die notwendige Zeitdauer die Antriebseinheit nicht durch Überlastung beschädigt werden kann. Vorteilhafterweise ist die Antriebseinheit an von der Behälterinnenwandung ausgehenden Streben befestigt, im Bereich des oberen Abschnittes angeordnet und mit der Platte über eine axial verlaufende Stange verbunden. Die derart vorgesehene Antriebseinheit ist von außen zu Wartungs- und Reparaturzwecken leicht zugänglich und durch die Stange ist eine exakte Betätigung der Verschlußplatte und eine gute Führung derselben möglich.

Um in vorteilhafter Weise die während des Öffnens oder Schließens des Behälters durch Heben oder Andrücken der Platte auf die Antriebseinheit einwirkenden Kräfte aufzunehmen, sind gemäß einem weiteren Merkmal der Erfindung zumindest zwei Streben vorgesehen, durch welche die Antriebseinheit an der Innenwandung des unteren Abschnittes des Behälters, vorzugsweise in unmittelbarer Nähe der Platte, abgestützt ist.

Die Antriebseinheit kann ein Elektromotor, eine Pneumatikeinrichtung, eine Hyraulikeinrichtung od.dgl. sein.

Bei den erfindungsgemäßen Behältern mit größerem Fassungsvermögen kann es für die Aufbewahrung aber auch den Transport von Vorteil sein, wenn gemäß einem weiteren Merkmal in axialer Verlängerung der im wesentlichen zylindrischen Wandung des Mittelstückes ein Standring mit vorzugsweise zur Behälterachse hin auskragender Standfläche mit dem Behälter verbunden ist, wobei am oberen Rand des Standringes zumindest eine Öffnung, vorzugsweise eine Gruppe entlang des Umfanges verteilter Öffnungen, vorgesehen ist. Natürlich kann ein derartiger Standring auch bei Behältern mit kleinerem Fassungsvermögen vorgesehen sein. Ein derartiger Standring erhöht auf jeden Fall die Stabilität des Behälters und schützt gleichzeitig den unteren Abschnitt und das Verschlußsystem des Behälters vor Beschädigungen oder Verformungen mit daraus resultierender Beeinträchtigung ihrer Funktion. Die am oberen Rand des Standringes vorgesehene Öffnung oder die Gruppe von Öffnungen läßt beim Füllen des Behälters durch Eintauchen in ein Gewässer oder in ein Wasserreservoir die zwischen dem unteren Abschnitt und dem Standring eingeschlossene Luft entweichen, sodaß eine stabile Lage und ein rasches Füllen des Behälters gewährleistet ist. Darüberhinaus können die besagten Öffnungen auch zum Einsetzen von Trageelementen für die händische oder maschinelle Manipulation des erfindungsgemäßen Behälters verwendet werden.

In der nachfolgenden Beschreibung sollen unter Bezugnahme auf die beigefügten Zeichnungen zwei bevorzugte Ausführungsbeispiele der Erfindung in nicht einschränkender Weise näher beschrieben werden. Dabei zeigeen
- Fig. 1: einen Querschnitt durch einen erfindungsgemäßen Behälter in einer einfachen Ausführung,
- Fig. 2: einen Querschnitt durch eine weitere Variante eines erfindungsgemäßen Behälters und
- Fig. 3: eine Draufsicht auf einen erfindungsgemäßen Behälter.

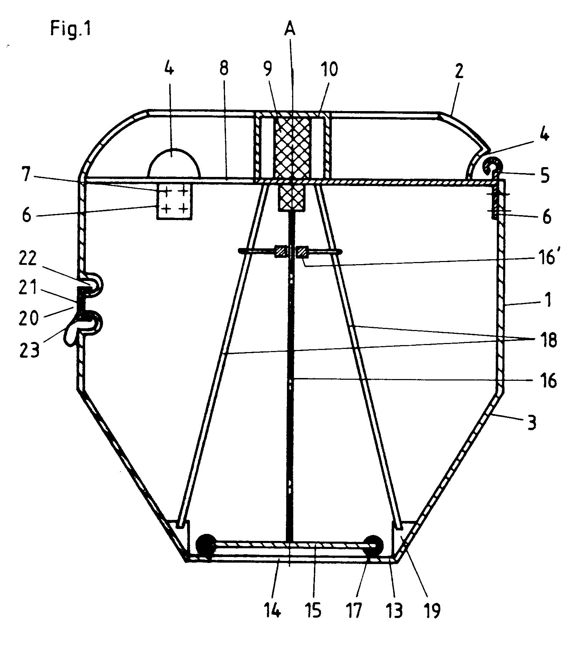

Die Fig. 1 zeigt einen Behälter, dessen Mittelstück 1 aus einem zylindrischen Abschnitt besteht, dessen Achse A normalerweise während der Aufbewahrung,des Transportes und der Benutzung normal auf den Boden bzw. normal auf die Längsachse des tragenden Fluggerätes steht. An dieses Mittelstück 1 schließt sich nach oben hin ein im wesentlichen kegelstumpfförmig auf die Behälterachse A zulaufender Abschnitt 2 an. Nach unten hin wird im Anschluß an das Mittelstück 1 ebenfalls ein kegelstumpfförmig auf die Achse A zulaufender unterer Abschnitt 3 vorgesehen. Vorzugsweise ist die den oberen Abschnitt 2 bildende Wandung konvex ausgeführt, während die Wandung des unteren Abschnittes 3 gerade verläuft.

Mit 4 sind Einbuchtungen in der Wandung des oberen Abschnittes 2 bezeichnet, in welchen Laschen 5 vorgesehen sind. Diese Laschen 5 dienen zur Anbringung des Behälters am tragenden Fluggerät mittels eines Traggehänges aus Gurten, Seilen, Ketten od.dgl. Beim Abkoppeln des Traggehänges vom Fluggerät bzw. wenn das Traggehänge vom Fluggerät zu weit nachgegeben wird, liegen die an die Laschen 5 anschließenden Bereiche des Traggehänges an der Außenseite des oberen Abschnittes 2 an und können sich daher nicht mit Teilen des Behälters verhängen.

Auch die nach oben weisende Anordnung der Laschen 5 trägt dazu bei. Ebenso wie das Merkmal, daß die besagten Laschen 5 an Platten 6 vorgesehen sind, die ihrerseits an der Innenwandung des Mittelstückes 1 des Behälters befestigt sind. Beispielhaft sind pro Befestigungsplatte 6 vier Befestigungsmittel 7, wie beispielsweise Schrauben, Nieten od.dgl. dargestellt.

Der Behälter ist vorzugsweise oben offen. Er kann aber auch nach oben hin durch eine ebene und normal auf die Behälterachse A stehende Wand begrenzt sein.

Zur Betätigung der Verschlußeinrichtung des Behälters ist eine Antriebseinheit 9 vorgesehen. Diese Antriebseinheit 9 ist vorteilhafterweise unter einer Abdeckung 10, beispielsweise aus Nirosta-Stahl (eingetragenes Warenzeichen), vor äußeren Einflüssen geschützt und an von der Behälterinnenwandung ausgehenden Streben 8 befestigt, wobei sie wegen der leichteren Zugänglichkeit zur Wartung und Reparatur und der günstigeren Anschlußmöglichkeiten für Steuer- und Energieversorgungsleitungen im Bereich des oberen Abschnittes 2 angeordnet ist. Die Antriebseinheit 9 kann bei vorhandener oberer Wand 8 auf dieser und nach unten hindurchreichend vorgesehen sein.

Die Antriebseinheit 9 wird in den meisten Fällen ein Elektromotor sein, der vom tragenden Fluggerät aus über eine Verbindungsleitung betätigbar ist. Anderseits sind die erforderlichen Steuerungsvorgänge zum Befüllen und Entleeren des Behälters auch pneumatisch mit Preßluftflaschen über Druckminderer,Steuerventile, Betätigungsschalter und Entlüftungsventile möglich. Die Steuerleitungen bestehen dabei aus zwei Schlauchleitungen mit zwei, vorzugsweise Schnelltrennkupplungen, zwischen den Preßluftflaschen und dem Behälter. Weiters wäre auch eine hydraulische Betätigung über einfach-oder doppeltwirkende Hydraulikzylinder denkbar.

Anschließend an den nach unten vorgesehenen kegelstumpfförmigen Abschnitt 3 ist ein den Behälter nach unten begrenzender,ebener und normal auf die Behälterachse A stehender Boden 13 vorgesehen. Darin ist eine Öffnung 14 ausgenommen, die durch eine Platte 15 verschließbar ist. Die Platte 15 ist dabei im Inneren des Behälters vorgesehen und wird von der Antriebseinheit 9 axial nach oben oder nach unten bewegt, um den Behälter zum Befüllen und Entleeren zu öffnen bzw. zu schließen. Zu diesem Zweck ist die Platte 15 mit der Antriebseinheit 9 über eine Stange 16 verbunden und zwischen Stange 16 und Antriebseinheit 9 ist zur Verhinderung von Beschädigungen der Antriebseinheit 9 eine Rutschkupplung vorgesehen. In befülltem Zustand des Behälters lastet das Gewicht des im Behälter befindlichen Materials auf der Platte 15 und erhöht dabei die Verschlußwirkung der Platte 15 und die Dichtwirkung eines allenfalls vorgesehenen umlaufenden Dichtelementes 17.

Die Antriebseinheit 9 stützt sich über zumindest zwei Streben 18 an der Innenwandung des unteren Abschnittes 3 ab. Die unteren Anbringungspunkte befinden sich dabei vorzugsweise in unmittelbarer Nähe der Platte, wofür an der Innenwandung des unteren Abschnittes 3 Rippen 19 vorgesehen sind, die ins Innere des Behälters ragen.

In Verbindung mit der Stange 16 kann ein Führungselement 16' vorgesehen sein, das die Streben 18 umgreift und auf diese Weise verhindert, daß die Stange 16 wesentlich von der in den Figuren dargestellten Positionen abweicht. Damit sind Beschädigungen und Funktionsstörungen in Bezug auf das Öffnen und Schließen des Behälters zu verhindern.

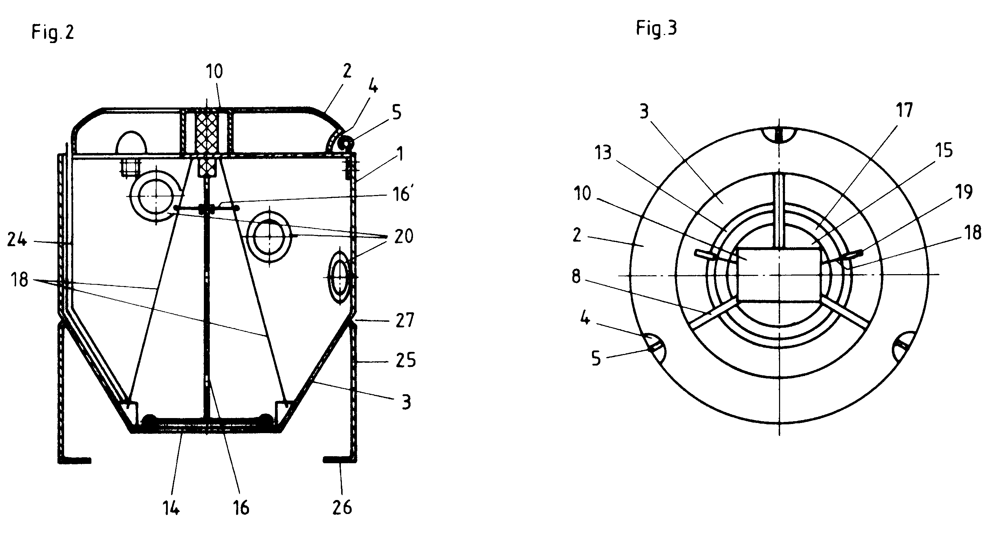

Die Fig.3 zeigt die Anbringung und Abstützung der Antriebseinheit 9 am Behälter in einer Draufsicht. Beispielhaft ist eine 3-Punkt-Aufhängung der Einheit 9 an drei in gleichen Winkelabständen angeordneten Streben 8 dargestellt. Weiters sind auch die Streben 18 mit ihren unteren Anbringungspunkten an den inneren Rippen 19 erkennbar.

Zur Veränderung des Fassungsvermögens des Behälters ist in der Wandung des Mittelstückes eine verschließbare Öffnung 20 mit einem Verschlußelement 21 vorgesehen. Das Verschlußelement 21 ist an der Wandung des Mittelstückes 1 mit einer kurzen Kette od.dgl. befestigt, sodaß es auch im geöffneten Zustand mit dem Behälter verbunden bleibt und nicht verlorengehen kann. Um auch bei der verschließbaren Öffnung die Gefahr des Verhängens von Seilen, Ketten, Leitungen, Kabeln u.dgl. zu vermeiden, ist vorgesehen, daß das Verschlußelement 21 mit der Wand des Mittelstückes 1 glatt abschließt. Zu diesem Zweck ist die Öffnung 20 in einer im wesentlichen kreisförmigen Ausnehmung 22 des Mittelstückes 1 mit einem nach außen ragenden und mit Gewinde versehenen Stutzen 23 ausgestattet.

Das in Fig. 2 dargestellte weitere Ausführungsbeispiel macht deutlich, daß anstelle einer einzelnen Öffnung 20 auch mehrere Öffnungen 20 in zumindest zwei unterschiedlichen, vorzugsweise mehreren Höhen des Mittelstückes vorgesehen sein können. Das gestattet eine feiner abgestufte Anpassung des Fassungsvermögens des Behälters. Über die bereits in Verbindung mit Fig. 1 hinaus beschriebenen und mit gleichen Bezugszeichgen bezeichneten Teile weist der in Fig. 2 dargestellte erfindungsgemäße Behälter zur Befüllung am Boden ein Befüllrohr 24 auf. Dieses Rohr 24 verläuft an der Innenseite des Mittelstückes 1 und des unteren Abschnittes 3 bis fast zum Boden 13 hinab. Es kann auch zum Entnehmen des im Behälter befindlichen Materials verwendet werden.

Weiters weist der in Fig. 2 dargestellte Behälter einen Standring 25 auf, der in axialer Verlängerung der Wandung des Mittelstückes 1 mit dem Behälter verbunden ist. An der Untersewite des Standringes 25 ist eine zur Behälterachse A hin auskragende Standfläche 26 zur besseren Verteilung des Gewichtes des Behälters auf den Untergrund vorgesehen. Die axiale Höhe des Standringes 25 ist etwas größer als die Höhe des unteren Abschnittes 3, sodaß der Boden 13 nicht am Untergrund aufliegt. Dadurch sind Beschädigungen oder Verformungen des Bodens 13 der Verschlußplatte 15 und des gesamten unteren Abschnittes 3 vermieden und deren Funktionssicherheit gewährleistet.

Am oberen Rand des Standringes 25 im Bereich von dessen Verbindung mit dem Behälter, insbesondere der Wandung des Mittelstückes 1, ist zumindest eine Öffnung 27 vorteilhafterweise eine entlang des Umfanges verteilte Gruppe von Öffnungen 27 vorgesehen, durch welche beim Eintauchen des Behälters, in beispielsweise Wasser, die davon verdrängte Luft entweichen kann. Darüberhinaus können in die Öffnungen 27 Tragelemente zur Handhabung des Behälters eingesetzt werden. Die Anzahl der Öffnungen ist dabei im wesentlichen beliebig wählbar.

Gleiches gilt auch für die Anzahl der Aufhangvorrichtungen, wobei jedoch vorteilhafterweise mindestens drei Aufhängvorrichtungen vorgesehen sind, die eines stabile Anbringung am ragenden Fluggerät ermöglichen. Vorzugsweise bei größeren Gewichten kann zur besseren Verteilung der Last die Anzahl der Aufhängvorrichtungen jedoch im Prinzip beliebig erhöht werden.

Das Material zur Herstellung des Behälters ist im Prinzip beliebig wählbar, wobei jedoch, um geringes Gewicht zu erzielen, Kunststoffe bevorzugt werden. Vorteilhafterweise ist der Behälter aus glasfaserverstärktem Polyesterharz angefertigt. Die Metallteile sind aus Nirostastahl (eingetragenes Warenzeichen) oder durch zusätzliche Behandlungen, wie beispielsweise Verzinken gegen Korrosion, geschützt.

Zur einfacheren Befestigung des Traggehänges am Behälter und zur Verbesserung des Schutzes gegen Verhängen des besagten Traggehänges an Teilen des Behälters ist vorzugsweise zwischen jeder Lasche 5 und dem Ende des jeweiligen Abschnittes des Traggehänges ein Konnexglied vorgesehen.

## Patentansprüche

1. Behälter, insbesondere zur Beförderung und Verbreitung von Material mittels Fluggeräten, speziell Außenlastbehälter für Flugzeuge oder Hubschrauber, bestehend aus einer stehend-zylindrischen Außenwandung (1), einem sich an die stehend-zylindrische Außenwandung (1) nach unten hin anschließenden, im wesentlichen kegelstumpfförmig auf die Behälterachse (A) zulaufenden Abschnitt (3), der nach unten hin durch einen ebenen und normal auf die Behälterachse (A) stehenden Boden (13) begrenzt ist, der durch eine Platte (15) verschließbar ist, und mehreren Aufhängevorrichtungen (5), dadurch gekennzeichnet, daß zumindest drei Aufhängevorrichtungen (5) über den Umfang des Behälters verteilt und am oberen Randbereich der stehend-zylindrischen Außenwandung (1) befestigt sind und sich an die stehend-zylindrische Außenwandung (1) auch nach oben hin ein im wesentlichen kegelstumpfförmiger auf die Behälterachse (A) zulaufender Abschnitt (2) anschließt.

2. Behälter nach Anspruch 1, dadurch gekennzeichnet, daß sich der nach oben hin anschließende Abschnitt (2) über eine obere, im wesentlichen normal auf die Behälterachse (A) orientierte Abschlußwand hinaus erstreckt.

3. Behälter nach Anspruch 1 oder 2, dadurch gekennzeichnet, daß in der Wandung des oberen Abschnittes (2) Einbuchtungen (4) vorgesehen sind, in welchen Einbuchtungen als Aufhängevorrichtungen Laschen (5) liegen, die an Platten (6) vorgesehen sind, welche Platten (6) an der Innenseite der stehend-zylindrischen Wandung (1) des Behälters befestigt sind.

4. Behälter nach Anspruch 3, dadurch gekennzeichnet, daß an jeder Lasche (5) ein Konnexglied angeschlossen und dieses mit einem Traggehänge aus Gurten, Seilen, Ketten oder dgl. verbunden ist.

5. Behälter nach einem der vorhergehenden Ansprüche, dadurch gekennzeichnet, daß in der stehend-zylindrischen Außenwandung (1) zumindest eine verschließbare Öffnung (20) vorgesehen ist.

6. Behälter nach Anspruch 5, dadurch gekennzeichnet, daß eine Mehrzahl von Öffnungen (20) in zumindest zwei unterschiedlichen Höhen vorgesehen ist.

7. Behälter nach Anspruch 5 oder 6, dadurch gekennzeichnet, daß die Verschlußelemente (21) der oder jeder Öffnung (20) mit der Außenwandung (1) glatt abschließen.

8. Behälter nach Anspruch 7, dadurch gekennzeichnet, daß das Verschlußelement (21) ein an der Wandung (1) befestigter Schraubverschluß ist.

9. Behälter nach einem der vorhergehenden Ansprüche, dadurch gekennzeichnet, daß die Platte (15) an der Innenseite des Bodens (13) angeordnet und in Richtung der Behälteraches (A) mittels einer vom tragenden Fluggerät aus ansteuerbaren Antriebseinheit (9) mit Rutschkupplung bewegbar ist.

10. Behälter nach Anspruch 9, dadurch gekennzeichnet, daß die Antriebseinheit (9) an von der Innenseite der Behälterwand (1) ausgehenden Streben (8) befestigt, im Bereich des oberen Abschnittes (2) angeordnet und mit der Platte (15) über eine axial verlaufende Stange (16) verbunden ist.

11. Behälter nach Anspruch 7, dadurch gekennzeichnet, daß die Antriebseinheit (9) an der Innenwandung des unteren Abschnittes (3) durch zumindest zwei Streben (18) abgestützt ist.

12. Behälter nach Anspruch 11, dadurch gekennzeichnet, daß die Streben (18) in unmittelbarer Nähe der Platte (15) abgestützt sind.

13. Behälter nach Anspruch 11 oder 12, dadurch gekennzeichnet, daß die Streben (18) von einer Führung (16') für die Stange (16) umgriffen sind.

14. Behälter nach einem der vorhergehenden Ansprüche, dadurch gekennzeichnet, daß in axialer Verlängerung der stehend-zylindrischen Außenwand (1) ein Standring (25) mit dem Behälter verbunden ist, wobei am oberen Rand des Standringes (25) zumindest eine Öffnung (27) vorgesehen ist.

15. Behälter nach Anspruch 14, dadurch gekennzeichnet, daß am unteren Rand des Standringes (25) eine zur Behälterachse (A) nach innen hin auskragende Standfläche (26) vorgesehen ist.

16. Behälter nach Anspruch 14 oder 15, dadurch gekennzeichnet, daß am oberen Rand des Standringes (25) eine Gruppe von entlang des Umfanges verteilten Öffnungen (27) vorgesehen ist.

## Claims

1. Container, especially for the transport and dispersal of material by means of aircraft, particularly an external container for carrying loads on airplanes or helicopters, consisting of one upright cylindrical external wall (1), a section (3) adjoining the bottom of the upright cylindrical external wall (1) and essentially tapered in relation to the container axis (A), said section ending in a flat bottom (13) perpendicular to the container axis (A), which bottom can be closed with a plate (15), as well as several suspension devices (5) characterized by the fact that at least three suspension devices (5) are distributed around the perimeter of the container and attached near the top edge of the upright cylindrical external wall (1), and a section (2) adjoining the top of the upright cylindrical external wall (1) and essentially tapered in relation to the container axis (A).

2. Container according to Claim 1, characterized by the fact that the section (2) adjoining the top extends beyond an end wall at the top which runs essentially perpendicular to the container axis (A).

3. Container according to Claim 1 or 2, characterized by the fact that the wall of the top section (2) has notches in it (4), which notches have brackets (5) serving as suspension devices which are mounted on plates (6) attached to the inner side of the upright cylindrical wall (1) of the container.

4. Container according to Claim 3, characterized by the fact that each bracket (5) has a connection piece attached to it and this connection piece is connected to supporting suspension tackle consisting of belts, ropes, chains, or the like.

5. Container according to one of the above claims, characterized by the fact that the upright cylindrical external wall (1) has at least one closable opening (20) in it.

6. Container according to Claim 5, characterized by the fact that it has a number of openings (20) positioned at at least two different heights.

7. Container according to Claim 5 or 6, characterized by the fact that the closing element (21) of the or of each opening (20) ends such that a smooth surface is created by it and the external wall (1).

8. Container according to Claim 7, characterized by the fact that the closing element (21) is a screwed connection attached to the wall (1).

9. Container according to one of the above claims, characterized by the fact that the plate (15) is placed on the inner side of the bottom (13) and can be moved in the direction of the container axis (A) by way of a drive unit (9) with a sliding clutch, which unit can be controlled from within the aircraft carrying the container.

10. Container according to Claim 9, characterized by the fact that the drive unit (9) is attached to braces (8) issuing from the inner side of the container wall (1), is positioned in the area of the upper section (2), and is connected with the plate (15) via a rod (16) running along the container axis.

11. Container according to Claim 7, characterized by the fact that the drive unit (9) on the inner wall of the lower section (3) is supported by at least two braces (18).

12. Container according to Claim 11, characterized by the fact that the braces (18) are supported in the immediate vicinity of the plate (15).

13. Container according to Claim 11 or 12, characterized by the fact that the braces (18) are encompassed by a guide (16') for the rod (16).

14. Container according to one of the above claims, characterized by the fact that an upright ring (25) is connected with the container in the axial extension of the upright cylindrical external wall (1), whereby the upright ring (25) has at least one opening (27) along its upper edge.

15. Container according to Claim 14, characterized by the fact that the lower edge of the upright ring (25) has a pedestal (26) protruding inward toward the container axis (A).

16. Container according to Claim 14 or 15, characterized by the fact that the upper edge of the upright ring (25) has a grouping of openings (27) distributed along its perimeter.

## Revendications

1. Conteneur, prévu essentiellement pour le transport et la diffusion de matériel par voie aérienne, en particulier, conteneur à charge extérieur pour avions ou hélicoptères, comportant une paroi extérieure (1) verticale cylindrique, une section (3) adjacente au bord inférieur de la paroi extérieure (1) verticale cylindrique, s'approchant de l'axe du conteneur (A) essentiellement sous forme tronconique et limitée, en bas, par un fond (13) plan, perpendiculaire à l'axe du conteneur (A) et fermant à l'aide d'une plaque (15), ainsi que plusieurs dispositifs de suspension (5), caractérisé en ce qu'au moins trois dispositifs de suspension (5) sont répartis sur la circonférence du conteneur et fixés au bord supérieur de la paroi extérieure (1) verticale cylindrique et qu'une section (2) s'approchant de l'axe du conteneur (A) essentiellement sous forme tronconique est rapportée également au bord supérieur de la paroi extérieure (1) verticale cylindrique.

2. Conteneur selon la revendication 1, caractérisé en ce que la section (2) adjacente au bord supérieur dépasse une paroi de recouvrement supérieure présentant une orientation essentiellement perpendiculaire à l'axe du conteneur (A).

3. Conteneur selon les revendications 1 et 2, caractérisé en ce que des retraits (4) sont prévus dans la paroi de la section supérieure (2), ces retraits contenant, à titre de dispositifs de suspension, des crochets (5) aménagés sur des plaques (6), ces plaques (6) étant fixées sur la face intérieure de la paroi (1) verticale cylindrique du conteneur.

4. Conteneur selon la revendication 3, caractérisé en ce qu'un élément de connexion est fixé à chaque crochet (5) et relié à une suspension consistant en sangles, cordes, chaînes etc.

5. Conteneur selon l'une quelconque des revendications précédentes, caractérisé en ce qu'au moins une ouverture fermante (20) est prévue dans la paroi extérieure (1) verticale cylindrique.

6. Conteneur selon la revendication 5, caractérisé en ce que plusieurs ouvertures (20) sont prévues à deux niveaux différents au moins.

7. Conteneur selon les revendications 5 et 6, caractérisé en ce que les éléments de fermeture (21) de l'ouverture ou de chacune des ouvertures (20) affleurent avec la paroi extérieure (1).

8. Conteneur selon la revendication 7, caractérisé en ce que l'élément de fermeture (21) est un bouchon fileté fixé sur la paroi (1).

9. Conteneur selon l'une quelconque des revendications précédentes, caractérisé en ce que la plaque (15) est disposée sur la face intérieure du fond (13) et peut être déplacée selon l'axe du conteneur (A) moyennant une unité de commande (9) avec accouplement à glissement commandée à partir de l'avion ou de l'hélicoptère portant le conteneur.

10. Conteneur selon la revendication 9, caractérisé en ce que l'unité de commande (9) est fixée à des étais (8) partant de la face intérieure de la paroi (1) du conteneur, disposée au niveau de la section supérieure (2) et réunie avec la plaque (15) par une barre axiale (16).

11. Conteneur selon la revendication 7, caractérisé en ce que l'unité de commande (9) est soutenue par au moins deux traverses (18) à la paroi intérieure de la section inférieure (3).

12. Conteneur selon la revendication 11, caractérisé en ce que les traverses (18) sont en butée à proximité immédiate de la plaque (15).

13. Conteneur selon les revendications 11 et 12, caractérisé en ce qu'un guidage (16') pour la barre (16) entoure les traverses (18).

14. Conteneur selon l'une quelconque des revendications précédentes, caractérisé en ce qu'une jupe de support (25) est reliée au conteneur dans le prolongement axial de la paroi extérieure (1) verticale cylindrique, au moins une ouverture (27) étant prévue au bord supérieur de la jupe de support (25).

15. Conteneur selon la revendication 14, caractérisé en ce qu'un talon (26) en saillie vers l'intérieur et l'axe du conteneur (A) est prévis au bord inférieur de la jupe de support (25).

16. Conteneur selon les revendications 14 et 15, caractérisé en ce qu'un groupe d'ouvertures (27) réparties le long de la circonférence est prévu au bord supérieur de la jupe de support (25).
